# FASCICULE DE BREVET EUROPEEN

(11) **EP 2 122 634 B1**
(45) Date de publication et mention de la délivrance du brevet: **04.04.2012**
(21) Numéro de dépôt: 07870289.1
(22) Date de dépôt: 16.11.2007
(51) Int. Cl.: G21C 5/06, G21C 3/326, G21C 7/117

(54) **GRAPPE FIXE A SUPPORT EN FORME D'ARAIGNEE, COEUR DE REACTEUR NUCLEAIRE A EAU SOUS PRESSION CORRESPONDANT ET ENSEMBLE COMPRENANT UN ASSEMBLAGE DE COMBUSTIBLE NUCLEAIRE ET UNE TELLE GRAPPE FIXE**
FESTCLUSTER MIT SPINNENFÖRMIGEM HALTER, DAZUGEHÖRIGER KERN EINES DRUCKWASSER-KERNREAKTORS UND SYSTEM MIT EINER ANORDNUNG AUS KERNBRENNSTOFF UND EINEM SOLCHEN FESTCLUSTER
FIXED CLUSTER WITH SPIDER-SHAPED HOLDER, RELATED CORE OF A PRESSURISED-WATER NUCLEAR REACTOR, AND SYSTEM INCLUDING AN ASSEMBLY OF NUCLEAR FUEL AND SUCH FIXED CLUSTER

(30) Priorité: 18.12.2006 FR 0611036
(43) Date de publication de la demande: 25.11.2009
(73) Titulaire: AREVA NP, 92400 Courbevoie (FR)
(72) Inventeur: MONCHANIN, Michel, F-69007 Lyon (FR); DELANNOY, Thierry, F-01700 Beynost (FR); PERGUE, Didier, 69100 Villeurbanne (FR); FERRY, Roman, F-69100 Villeurbanne (FR)
(74) Mandataire: Blot, Philippe Robert Emile
(86) Numéro de dépôt international: PCT/FR2007/001883
(87) Numéro de publication internationale: WO 2008/081085

(56) Documents cités:
- JP-A- 9 145 879
- JP-A- 10 170 679
- US-A- 4 208 247
- US-A- 4 304 631
- US-A- 4 820 475

## Description

La présente invention concerne une grappe fixe pour coeur de réacteur nucléaire à eau sous pression du type comprenant :
- des crayons destinés à être insérés dans des tubes-guides d'un assemblage de combustible nucléaire,
- un support des crayons depuis lequel les crayons s'étendent le long d'une direction longitudinale dans un sens destiné à être orienté verticalement vers le bas lorsque la grappe fixe est disposée sur un assemblage de combustible nucléaire, et
- au moins un élément d'appui longitudinal contre la plaque supérieure du coeur du réacteur nucléaire.

De manière classique, un assemblage de combustible nucléaire comprend un faisceau de crayons de combustible nucléaire et un squelette de support de ces crayons. Le squelette comprend un embout inférieur, un embout supérieur et des tubes-guides reliant ces deux embouts et destinés à recevoir les crayons de grappes mobiles de réglage du fonctionnement du coeur du réacteur nucléaire.

Chaque grappe mobile comprend un faisceau de crayons absorbant les neutrons maintenus par un support. Ce support est généralement dénommé « araignée » et il est constitué par un pommeau autour duquel rayonnent des ailettes munies de doigts de montage des crayons absorbant les neutrons.

Au cours d'un cycle de fonctionnement du coeur, les grappes mobiles vont être déplacées pour enfoncer plus ou moins leurs crayons dans les tubes-guides correspondants et ainsi régler la réactivité dans le coeur du réacteur nucléaire.

Dans un coeur de réacteur nucléaire, certains des assemblages de combustible nucléaire ne sont pas munis de grappes mobiles mais sont munis de grappes dites fixes, puisqu'elles ne sont pas soumises à un déplacement contrôlé lors d'un cycle de fonctionnement du coeur.

C'est notamment le cas des grappes à poison consommable. Au moins certains de leurs crayons comprennent un poison neutronique consommable qui va permettre la réduction de la concentration du bore dissout dans l'eau du circuit primaire, principalement en début de cycle.

C'est également le cas des grappes bouchons qui équipent certains assemblages. Les crayons de ces grappes bouchons occupent alors les tubes-guides des assemblages concernés afin de limiter le débit hydraulique de contournement des assemblages de combustible avoisinants qui sont eux munis de grappes mobiles.

C'est encore le cas des grappes sources neutroniques. Ces grappes, qui peuvent être des grappes sources primaires ou sources secondaires, interviennent dans les phases de démarrage pour initier la réaction et/ou étalonner les chaînes de comptage du réacteur nucléaire.

On connaît du document JP-7/218 672 une grappe fixe du type précité qui est, plus précisément, une grappe à poison consommable.

Le support des crayons est constitué par une plaque perforée munie en son centre d'un guide cylindrique qui s'étend vers le haut. Ce guide cylindrique peut coulisser verticalement par rapport à une barre en appui sous la plaque supérieure de coeur. La barre d'appui s'étend au travers du trou de passage d'eau ménagé dans la plaque supérieure de coeur au-dessus de l'assemblage de combustible nucléaire concerné. Un ressort s'étend autour du guide cylindrique entre le support des crayons et la barre d'appui. Le ressort s'oppose alors au déplacement vers le haut du support sous l'action de la poussée hydraulique de l'eau du circuit primaire.

De manière générale, les grappes mobiles induisent dans l'eau du circuit primaire des pertes de charge qui sont plus réduites que les grappes fixes. Ainsi, le débit ascendant de l'eau du circuit primaire va être plus important au travers des assemblages munis de grappes mobiles que dans les assemblages munis de grappes fixes.

Ce surdébit va se traduire par un effort de plaquage accru des crayons des grappes mobiles dans les guides de la grappe disposés au-dessus de la plaque supérieure de coeur ainsi que par des vibrations importantes des crayons. Ces vibrations sont dues aux écoulements d'eau qui tendent à s'établir, en aval des assemblages suralimentés en eau du circuit primaire et des assemblages sous-alimentés, afin de rééquilibrer la répartition d'eau.

Le document JP 10170 679 décrit une grappe fixe selon le préambule de la revendication 1.

Afin de réduire les pertes de charge induites par les grappes fixes, et donc de réduire les difficultés précitées, le document JP-7/218 672 a modifié la forme des crayons d'une grappe fixe pour augmenter le débit à l'intérieur des tubes-guides de l'assemblage de combustible nucléaire.

Cette solution permet certes de réduire la perte de charge, mais elle s'accompagne également d'une dégradation du refroidissement des crayons de combustible nucléaire de l'assemblage associé, puisque l'eau circule alors préférentiellement dans les tubes-guides plutôt qu'autour des crayons de combustible nucléaire.

Un but de l'invention est donc de résoudre ce problème en fournissant une grappe fixe du type précité qui induise des pertes de charge plus réduites dans l'eau du circuit primaire sans dégrader le rendement du coeur.

A cet effet, l'invention a pour objet une grappe fixe selon la revendication 1.

Selon des modes particuliers de réalisation, la grappe fixe peut comprendre l'une ou plusieurs des caractéristiques des revendications dépendantes 2 à 9.

L'invention a également pour objet un coeur de réacteur nucléaire selon la revendication 10.

Les revendications dépendantes 11 et 12 concernent des variantes du coeur de la revendication 10.

L'Invention a également pour objet un ensemble selon la revendication 13.

L'invention sera mieux comprise à la lecture de la description qui va suivre donnée uniquement à titre d'exemple, et faite en se référant aux dessins annexés, sur lesquels :
- la figure 1 est une vue schématique en perspective d'une grappe fixe selon un premier mode de réalisation de l'invention,
- la figure 2 est une vue schématique de dessus de la grappe de la figure 1,
- la figure 3 est une vue schématique en coupe prise suivant la ligne III-III de la figure 2,
- la figure 4 est une vue partielle schématique, en coupe prise suivant la ligne brisée IV-IV de la figure 2, et illustrant l'appui de la grappe de la figure 1 sur une plaque supérieure de coeur d'un réacteur nucléaire, et
- les figures 5 et 6 sont des vues schématiques de dessus illustrant les sections d'écoulement de l'eau du circuit primaire autour d'une grappe fixe selon l'état de la technique et selon l'invention.

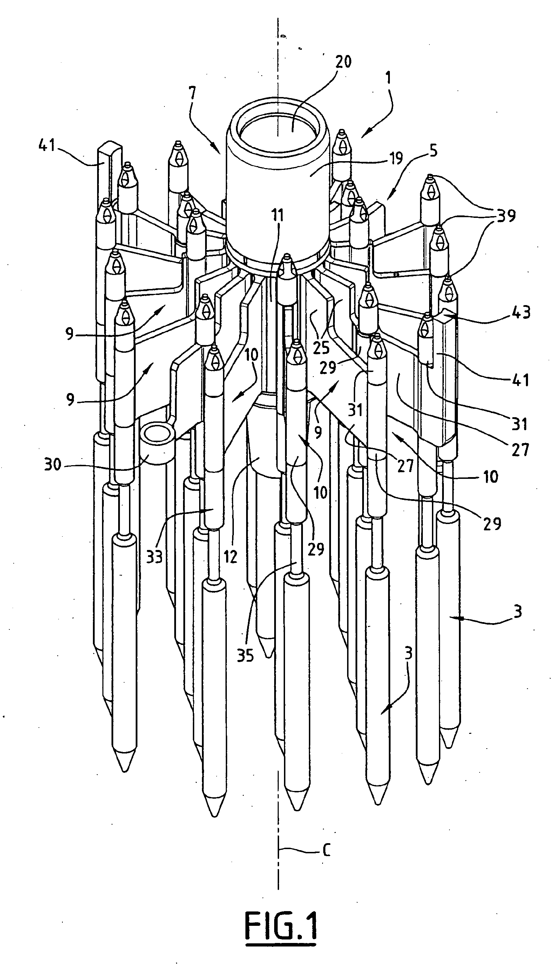

La figure 1 illustre une grappe fixe 1 pour réacteur nucléaire à eau sous pression (PWR en anglais). Il s'agit par exemple d'une grappe bouchon.

La grappe 1 comprend principalement des crayons 3 et un support 5.

Le support 5 a une forme globalement semblable à celle utilisée dans l'état de la technique pour les grappes mobiles, hormis les principales différences soulignées dans la suite de la description.

Ce support 5, qu'on peut donc qualifier d'araignée, comprend principalement :
- un pommeau 7 dont l'axe longitudinal et central C est destiné à être orienté verticalement lorsque la grappe 1 est disposée sur un assemblage de combustible nucléaire dans un coeur de réacteur nucléaire,
- des ailettes 9 qui s'étendent radialement vers l'extérieur depuis le pommeau 7 et qui sont réparties angulairement sensiblement régulièrement autour de l'axe C, et
- des systèmes 10 de montage des crayons 3 sur le support 5.

Le support 5 est réalisé en métal résistant aux radiations, par exemple en acier tel que de l'acier AISI 304.

Le pommeau 7 a une forme de cylindre creux à base circulaire. Il comprend une partie inférieure 11 depuis laquelle les ailettes 9 s'étendent. Cette partie inférieure 11 est par exemple venue de matière avec les ailettes 9, comme décrit dans le document FR-2 742 912 et le document correspondant US-5 889 832. La partie inférieure 11 du pommeau 7 et les ailettes 9 peuvent alors être réalisées par moulage, usinage ou par électro-érosion.

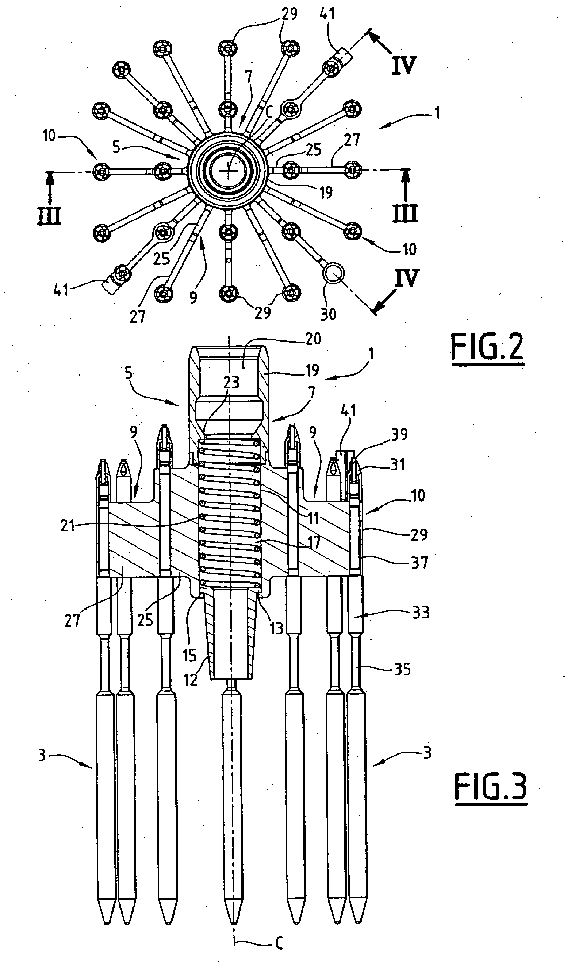

Le support 5 comprend en outre une bague 12 d'appui sur l'embout supérieur de l'assemblage de combustible nucléaire auquel la grappe 1 est destinée à être associée. Cette bague 12 comprend une collerette 13 (fig. 3) qui peut s'appuyer vers le bas contre un rebord inférieur 15 du pommeau 7. La collerette 13 est ainsi retenue à l'intérieur de l'alésage central 17 ménagé dans le pommeau 7.

La partie supérieure 19 du pommeau 7 est rapportée sur la partie inférieure 11 et fixée à celle-ci par exemple par vissage, soudage, brasage ou collage. L'alésage 17 est terminé, dans la partie supérieure 19, par un tronçon supérieur 20 qui forme une cavité d'accouplement du pommeau 7 à un outil de manutention de la grappe fixe 1.

Un ressort 21 de poussée est disposé dans l'alésage 17 et prend appui par son extrémité inférieure sur la collerette 13 et par son extrémité supérieure sur une cloison interne 23 ménagée à l'intérieur de la partie supérieure 19 du pommeau 7.

La bague 12 est mobile par translation entre une position abaissée (figs 1 et 3) et une position soulevée non-représentée. Le ressort 21 est comprimé lors du passage de la bague 12 en position soulevée et rappelle la bague 12 vers sa position abaissée.

Les ailettes 9 comprennent chacune un tronçon 25 radialement intérieur et un tronçon 27 radialement extérieur. Les tronçons intérieurs 25 ont des hauteurs, prises le long de l'axe central C, plus importantes que celle des tronçons extérieurs 27.

Les systèmes de montage 10 comprennent des doigts 29 de réception des crayons 3 et des écrous 31 de fixation des crayons 3 dans les doigts 29.

Les doigts 29 sont répartis sur les ailettes 9 selon un motif analogue à celui de la répartition des tubes-guides dans l'assemblage de combustible nucléaire que la grappe 1 doit équiper. Cette répartition est en particulier visible sur la figure 2.

La plupart des ailettes 9 sont munies de deux doigts 29. Certains des doigts 29 sont prévus sur des tronçons intérieurs 25 et d'autres sur des tronçons extérieurs 27. Les doigts 29 ont sensiblement la même hauteur, prise le long de l'axe C, que le tronçon 25 ou 27 sur lequel ils sont prévus. Une ailette 9 peut cependant comprendre à un emplacement correspondant à un tube-guide, un passage 30 de réception d'un dispositif d'instrumentation à la place d'un doigt 29.

Chaque doigt 29 est prévu pour recevoir un prolongement 33 du bouchon d'un crayon 3. Dans l'exemple représenté, chaque prolongement 33 comprend un tronçon 35 de section réduite puis traverse un alésage 37 prévu dans le doigt 29 correspondant. Un écrou 31 est vissé sur l'extrémité supérieure du prolongement 33, cette extrémité supérieure faisant saillie vers le haut au-delà du doigt 29 considéré. Une tige terminale 39 fait saillie vers le haut depuis l'extrémité supérieure du prolongement 33 et traverse l'écrou 31. Cette tige terminale 39 a été fondue et soudée à l'écrou 31 assurant ainsi un blocage en rotation de l'écrou 31 par rapport au crayon 3 considéré.

Les crayons 3 sont ainsi fixés sur le support 5 et s'étendent depuis ce dernier vers le bas, parallèlement à l'axe C. Les crayons 3 forment un faisceau avec une répartition qui correspond à celle des doigts 29 et donc à celle des tubes-guides de l'assemblage de combustible nucléaire que la grappe 1 est destinée à équiper.

Les doigts 29 sont dans l'exemple représenté venus de matière avec les ailettes 9 et ont été réalisés en même temps que ces dernières et que la partie inférieure 11 du pommeau 7.

Contrairement à ce qui était prévu dans l'état de la technique pour les grappes mobiles, la grappe fixe 1 selon l'invention comprend deux ailettes 9 de longueur radiale plus importante et dont les extrémités radiales sont prolongées longitudinalement vers le haut, chacune par un élément 41 d'appui sur la plaque supérieure du coeur d'un réacteur nucléaire.

Dans l'exemple représenté, la grappe 1 comprend deux éléments 41 qui sont prévus sur des ailettes 9 diamétralement opposées par rapport à l'axe central C.

Les éléments d'appui 41 ayant une structure analogue, un seul sera décrit par la suite.

L'élément d'appui 41 a une forme de barre et il est venu de matière avec l'ailette 9. L'élément d'appui 41 est donc un élément rigide et massif qui est espacé radialement de manière importante du pommeau 7.

L'élément d'appui 41 est disposé radialement à l'extérieur par rapport à l'écrou 31 adjacent et fait saillie vers le haut depuis le tronçon extérieur 27 de l'ailette 9 associée au-delà de l'écrou 31 considéré. Cela est notamment visible sur la figure 3.

La surface radialement intérieure 43 (fig. 1) de l'élément d'appui 41 est dans l'exemple représenté concave pour permettre à un outil de manoeuvrer l'écrou 31.

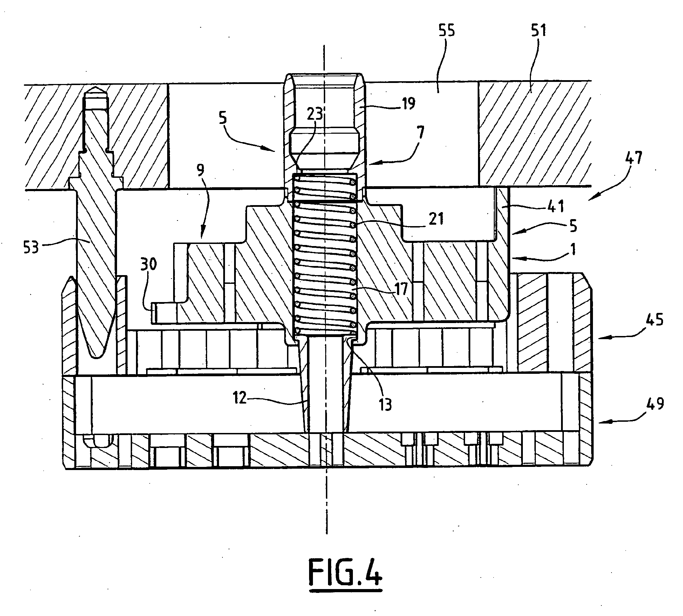

La figure 4 illustre la grappe 1 des figures 1 à 3 équipant un assemblage 45 de combustible nucléaire dans un coeur 47 de réacteur nucléaire à eau sous pression.

Sur la figure 4, seul le support 5 de la grappe 1 a été représenté et les crayons 3 n'ont pas été représentés. Pour l'assemblage 45, seul l'embout supérieur 49 est visible. On distingue également sur cette figure 4 une partie de la plaque supérieure 51 du coeur 47 ainsi qu'un pion 53 de positionnement de l'assemblage 45.

De manière classique, un trou 55 de passage d'eau est ménagé dans la plaque supérieure 51 en regard de l'embout supérieur 49 de l'assemblage 45.

Contrairement à ce qui était prévu dans l'état de la technique, le trou 55 n'est pas obturé en partie par une barre d'appui de la grappe fixe 1, mais l'appui de la grappe fixe 1 sur la plaque supérieure 51 est assuré grâce aux éléments 41. Plus spécifiquement, les éléments 41 viennent prendre appui longitudinalement sur la plaque supérieure 51 autour du trou 55.

La grappe 1 prend par ailleurs appui sur l'embout supérieur 49 de l'assemblage 45 par l'intermédiaire de la bague 12, comprimant ainsi le ressort 21. Pour des raisons de simplification, cette compression du ressort 21 n'a pas été représentée sur la figure 4.

Comme indiqué précédemment, grâce à la présence des éléments d'appui 41, il n'est pas nécessaire de prévoir une barre d'appui qui s'étend au travers du trou 55. La perte de charge induite par la grappe fixe 1 est donc réduite. Cette perte de charge est encore plus réduite du fait de l'utilisation d'un support 5 ayant une forme d'araignée, c'est-à-dire avec un pommeau central 7 et des ailettes 9 rayonnant autour.

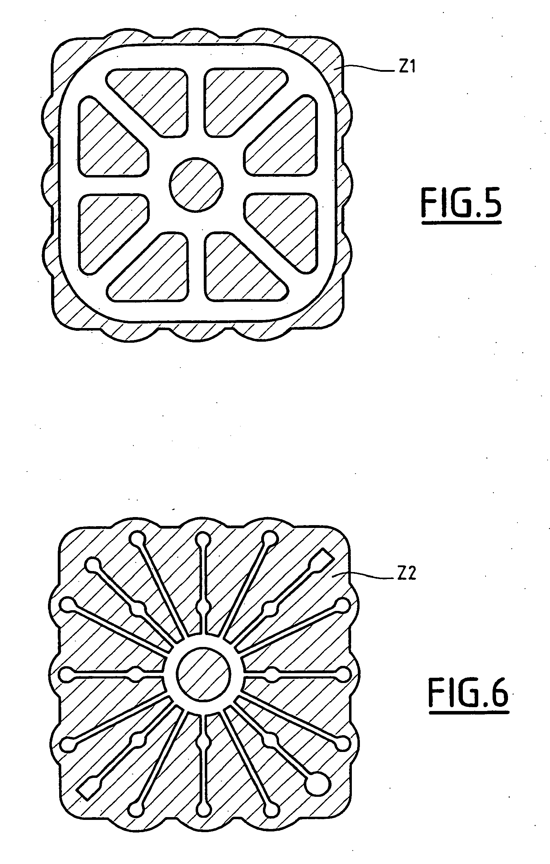

Cela est illustré par les figures 5 et 6 où les zones hachurées correspondent aux sections d'écoulement de l'eau du circuit primaire en aval de l'embout supérieur d'un assemblage d'un combustible nucléaire. La surface de la section d'écoulement d'eau Z2 avec une grappe fixe 1 selon l'invention (figure 6) est plus importante d'environ 50% par rapport à celle Z1 d'une grappe fixe selon l'état de la technique (figure 5).

La perte de charge est encore réduite du fait de la forme fuselée du support 5 et du fait que le ressort 21 est disposé à l'intérieur du pommeau 7, et non pas à l'extérieur du support 5 comme dans l'état de la technique pour les grappes fixes.

De plus, cette diminution de la perte de charge ne s'accompagne pas d'une détérioration du refroidissement des crayons de combustible nucléaire et ne diminue donc pas le rendement du coeur.

L'utilisation d'un support 5 ayant une structure de type araignée permet également de rapprocher la structure des grappes fixes de celle des grappes mobiles et donc de diminuer les différences entre les pertes de charge induites par les différentes grappes au sein d'un même coeur 47.

Ainsi, dans un mode préféré de réalisation on utilise, dans un coeur 47 de réacteur nucléaire, des grappes fixes 1 et mobiles avec des supports 5 qui ont des formes analogues d'araignée. La distribution d'eau est alors plus homogène dans les assemblages de combustible nucléaire, ce qui évite les problèmes associés, et notamment les débits transverses d'équilibrage.

En outre, un tel coeur 47 permet également d'utiliser un seul type d'outil de manutention pour manipuler les grappes fixes et les grappes mobiles.

On observera que dans un tel coeur, les formes des supports des grappes mobiles peuvent être légèrement différentes de celles des grappes fixes, notamment en ce qu'elles ne comprennent pas d'élément d'appui 41 qui empêcherait leur libre passage à travers le trou de passage d'eau 55 de la plaque supérieure 51 du coeur 47. De même, seules certaines grappes fixe(s) 1 et mobile(s) peuvent avoir des supports 5 de formes analogues. De préférence, de telles grappes fixe(s) 1 et mobile(s) à supports analogues seront adjacentes dans le coeur 47.

On observera encore que, dans la grappe fixe 1 des figures 1 à 4, la position des écrous 31 à différents niveaux le long de l'axe central C permet également de faciliter l'engagement d'un outil de manutention.

En effet, l'engagement d'un tel outil, qui comprend un logement de réception du pommeau 7 et des écrous 31, se fait tout d'abord par la partie supérieure 19 du pommeau 7, puis par les écrous 31 situés au niveau le plus élevé et enfin par les écrous 31 situés au niveau le plus bas.

L'engagement étagé des écrous 31 permet de s'assurer que la position relative de l'outil et du support 5 est correcte et donc d'effectuer plus rapidement cet engagement.

En outre, on observera que l'effort de maintien exercé par la grappe fixe 1 sur l'assemblage de combustible 45 est fortement réduit par rapport à celui de l'état de la technique, puisque le ressort 21 n'a pas à assurer une reprise de tous les efforts hydrauliques exercés sur la grappe 1 par l'eau du circuit primaire. En effet, dans la grappe fixe 1 des figures 1 à 4, cette reprise est assurée directement par les éléments d'appui 41.

Dans l'état de la technique, la durée de vie des grappes bouchons est souvent limitée par le vieillissement du ressort. Le ressort 21 de la grappe fixe 1 étant soumis à de moindres sollicitations la durée de vie de la grappe fixe 1 est augmentée, ce qui permet de réduire la quantité de déchets radioactifs produits par l'exploitation d'un réacteur nucléaire.

Dans la grappe fixe 1 des figures 1 à 4, le ressort 21 a donc pour seule fonction de conserver la grappe fixe 1 au contact de l'embout supérieur 49 et l'effort appliqué sur l'assemblage 45 peut donc être réduit d'au moins 50% en début de vie. Cette diminution de l'effort permet de limiter la déformation en service de l'assemblage 45.

En outre, on observera que le support 5 comporte un nombre de pièces réduit, du fait d'une part de la réalisation en une seule pièce de la partie inférieure 11 du pommeau 7, des ailettes 9 et des doigts 29, et d'autre part de l'arrêt en rotation des écrous 31 par soudage des tiges 39, ce qui permet de s'affranchir des systèmes classiques d'arrêt à goupilles..

Toutefois, on observera que le support 5 peut avoir une structure différente de celle décrite ci-dessus, et par exemple être réalisé en un nombre de pièces plus important. Ainsi, à titre d'exemple, les ailettes 9 peuvent présenter des embranchements depuis lesquels plusieurs portions d'ailettes s'étendent, comme décrit dans EP-158 812. De même, le nombre de passage(s) 30 de réception de dispositif(s) d'instrumentation ainsi que leur(s) position(s) peuvent varier.

De plus, les systèmes 10 de montage des crayons peuvent être différents de ceux décrits précédemment.

Dans l'exemple décrit précédemment, deux éléments d'appui 41 ont été prévus, mais ce nombre peut également varier en fonction des besoins et contraintes propres aux géométries des réacteurs à équiper, et en particulier de la position, de la taille et de la forme des trous de passage d'eau 55 de la plaque supérieure 51 du coeur 47. De préférence, les éléments d'appui seront répartis angulairement de manière sensiblement régulière autour de l'axe C.

Enfin, les éléments d'appui 41 étant situés radialement à l'extérieur par rapport aux systèmes de montage 10 adjacents, et donc aux crayons adjacents 3, la grappe fixe 1 peut être utilisée à tous les emplacements du coeur, et pas uniquement à ceux correspondant aux trous 55 de dimensions réduites. La grappe 1 permet donc d'augmenter la standardisation et de limiter les coûts.

## Revendications

1. Grappe fixe (1) pour coeur (47) de réacteur nucléaire à eau sous pression, la grappe comprenant :
- des crayons (3) destinés à être insérés dans des tubes-guides d'un assemblage (45) de combustible nucléaire,
- un support (5) des crayons (3) depuis lequel les crayons (3) s'étendent le long d'une direction longitudinale dans un sens destiné à être orienté verticalement vers le bas lorsque la grappe fixe (1) est disposée sur un assemblage de combustible nucléaire (45),
- au moins un élément (41) d'appui longitudinal contre la plaque supérieure (51) du coeur (47) du réacteur nucléaire,
le support (5) comprenant :
- un pommeau (7) présentant un axe central longitudinal (C),
- des ailettes (9) s'étendant radialement vers l'extérieur depuis le pommeau (7),
- des systèmes (10) de montage des crayons (3) répartis sur les ailettes (9), et
- au moins deux éléments (41) d'appui sur la plaque supérieure (51) du coeur, lesquels éléments d'appui (41) font saillie longitudinalement chacun depuis une ailette (9) respective, au-delà des systèmes de montage (10), dans un sens destiné à être orienté verticalement vers le haut lorsque la grappe fixe (1) est disposée sur un assemblage de combustible nucléaire (45),
**caractérisée en ce que**
les éléments d'appui (41) sont disposés radialement à l'extérieur par rapport aux systèmes de montage (10) adjacents.

2. Grappe selon la revendication 1, dans laquelle les éléments d'appui (41) sont situés aux extrémités radialement extérieures d'ailettes (9).

3. Grappe selon la revendication 1 ou 2, dans laquelle les éléments d'appui (41) sont disposés angulairement autour de l'axe central longitudinal (C) de manière sensiblement régulière.

4. Grappe selon la revendication 3, dans laquelle le support (5) comprend deux éléments d'appui (41) qui sont disposés sensiblement de manière diamétralement opposée par rapport à l'axe central longitudinal (C).

5. Grappe selon l'une des revendications précédentes, dans laquelle au moins une partie (11) du pommeau (7) et les ailettes (9) sont venues de matière.

6. Grappe selon l'une des revendications précédentes, dans laquelle les systèmes de montage (10) comprennent des doigts (29) de réception des extrémités supérieures (33) des crayons (3) et des écrous (31) vissés sur les extrémités supérieures (33) pour fixer des crayons (3) dans les doigts de réception (29).

7. Grappe selon la revendication 6, dans laquelle les écrous (31) font saillie longitudinalement depuis les doigts (29) dans un sens destiné à être orienté verticalement vers le haut lorsque la grappe fixe (1) est disposée sur un assemblage de combustible nucléaire (45), et dans laquelle des écrous (31) sont disposés à des niveaux différents le long de l'axe central longitudinal (C).

8. Grappe selon la revendication 6 ou 7, dans laquelle les extrémités supérieures (33) des crayons (3) comprennent des tiges (39) qui traversent les écrous (31) et qui sont soudées aux écrous (31).

9. Grappe selon l'une des revendications précédentes, dans laquelle au moins une ailette (29) comprend un passage (30) de réception d'un dispositif d'instrumentation.

10. Coeur (47) de réacteur nucléaire à eau sous pression, comprenant une plaque supérieure (51), une plaque inférieure et des assemblages de combustible nucléaire (45) disposés entre les plaques supérieure (51) et inférieure, le coeur (47) comprenant en outre des grappes fixes (1) et des grappes mobiles disposées sur des assemblages de combustible nucléaire (45) respectifs, les grappes fixes comprenant chacune :
- des crayons (3) destinés à être insérés dans des tubes-guides de l'assemblage de combustible nucléaire (45) respectif,
- un support (5) des crayons (3) depuis lequel les crayons (3) s'étendent le long d'une direction longitudinale dans un sens destiné à être orienté verticalement vers le bas lorsque la grappe fixe (1) est disposée sur l'assemblage de combustible nucléaire (45) respectif,
- au moins un élément (41) d'appui longitudinal contre la plaque supérieure (51) du coeur (47) du réacteur nucléaire,
**caractérisé en ce qu'**au moins une des grappes fixes est une grappe fixe selon l'une des revendications précédentes, les éléments d'appui (41) de la grappe fixe (1) prenant appui verticalement contre la plaque supérieure (51) autour d'un trou de passage d'eau (55) prévu dans la plaque supérieure (51) au-dessus de l'assemblage de combustible nucléaire (45) sur lequel ladite grappe fixe (1) est disposée.

11. Coeur selon la revendication 10, dans lequel au moins une grappe mobile comprend :
- des crayons destinés à être insérés dans des tubes-guides de l'assemblage de combustible nucléaire respectif,
- un support des crayons depuis lequel les crayons s'étendent le long d'une direction longitudinale dans un sens destiné à être orienté verticalement vers le bas lorsque la grappe mobile est disposée sur l'assemblage de combustible nucléaire respectif,
et dans lequel les formes des supports (5) de ladite grappe fixe (1) et de ladite grappe mobile sont analogues.

12. Coeur selon la revendication 11, dans lequel ladite grappe fixe (1) et ladite grappe mobile sont adjacentes.

13. Ensemble comprenant un assemblage de combustible nucléaire et une grappe fixe (1) apte à être disposée sur l'assemblage de combustible nucléaire (45), **caractérisé en ce que** la grappe fixe est une grappe fixe (1) selon l'une des revendications 1 à 9.

## Claims

1. Fixed cluster (1) for a pressurised water nuclear reactor core (47), the cluster comprising:
- rods (3) which are intended to be inserted into guide tubes of a nuclear fuel assembly (45),
- a support (5) for the rods (3) from which the rods (3) extend in a longitudinal direction in a direction which is intended to be orientated vertically downwards when the fixed cluster (1) is arranged on a nuclear fuel assembly (45),
- at least one element (41) for longitudinal abutment against the upper plate (51) of the core (47) of the nuclear reactor, the support (5) comprising:
- an upper head (7) which has a longitudinal centre axis (C),
- fins (9) which extend radially outwards from the upper head (7),
- systems (10) for mounting the rods (3) distributed on the fins (9), and
- at least two elements (41) for abutment against the upper plate (51) of the core, which abutment elements (41) each protrude longitudinally from a respective fin (9), beyond the mounting systems (10), in a direction which is intended to be orientated vertically upwards when the fixed cluster (1) is arranged on a nuclear fuel assembly (45), **characterized in that** the abutment elements (41) are arranged radially outwards relative to the adjacent mounting systems (10).

2. Cluster according to claim 1, wherein the abutment elements (41) are located at the radially outer ends of fins (9).

3. Cluster according to claim 1 or claim 2, wherein the abutment elements (41) are arranged angularly about the longitudinal centre axis (C) in a substantially regular manner.

4. Cluster according to claim 3, wherein the support (5) comprises two abutment elements (41) which are arranged in a substantially diametrically opposed manner relative to the longitudinal centre axis (C).

5. Cluster according to any one of the preceding claims, wherein at least one portion (11) of the upper head (7) and the fins (9) are integral.

6. Cluster according to any one of the preceding claims, wherein the mounting systems (10) comprise members (29) for receiving the upper ends (33) of the rods (3) and the nuts (31) which are screwed to the upper ends (33) in order to fix rods (3) in the receiving members (29).

7. Cluster according to claim 6, wherein the nuts (31) protrude longitudinally from the members (29) in a direction which is intended to be orientated vertically upwards when the fixed cluster (1) is arranged on a nuclear fuel assembly (45), and wherein nuts are arranged at various levels along the longitudinal centre axis (C).

8. Cluster according to claim 6 or claim 7, wherein the upper ends (33) of the rods (3) comprise shanks (39) which extend through the nuts (31) and which are welded to the nuts (31).

9. Cluster according to any one of the preceding claims, wherein at least one fin (9) comprises a passage (30) for receiving an instrument.

10. Core (47) of a pressurised water nuclear reactor comprising an upper plate (51), a lower plate and nuclear fuel assemblies (45) which are arranged between the upper plate (51) and lower plate, the core (47) further comprising fixed clusters (1) and movable clusters which are arranged on respective nuclear fuel assemblies (45), the fixed clusters each comprising:
- rods (3) which are intended to be inserted into guide tubes of the respective nuclear fuel assembly (45),
- a support (5) for the rods (3) from which the rods (3) extend in a longitudinal direction in a direction which is intended to be orientated vertically downwards when the fixed cluster (1) is arranged on the respective nuclear fuel assembly (45),
- at least one element (41) for longitudinal abutment against the upper plate (51) of the core (47) of the nuclear reactor, **characterised in that** at least one of the fixed clusters is a fixed cluster according to any one of the preceding claims, the abutment elements (41) of the fixed cluster (1) being in vertical abutment against the upper plate (51) around a water passage hole (55) which is provided in the upper plate (51) above the nuclear fuel assembly (45) on which the fixed cluster (1) is arranged.

11. Core according to claim 10, wherein at least one movable cluster comprises:
- rods which are intended to be inserted into guide tubes of the respective nuclear fuel assembly,
- a rod support from which the rods extend in a longitudinal direction in a direction which is intended to be orientated vertically downwards when the movable cluster is arranged on the respective nuclear fuel assembly,
and wherein the shapes of the supports (5) for the fixed cluster (1) and the movable cluster are similar.

12. Core according to claim 11, wherein the fixed cluster (1) and the movable cluster are adjacent.

13. Assembly comprising a nuclear fuel assembly and a fixed cluster (1) which is capable of being arranged on the nuclear fuel assembly (45), **characterised in that** the fixed cluster is a fixed cluster (1) according to any one of claims 1 to 9.

## Patentansprüche

1. Fester spinnenförmiger Halter (1) für den Kern (47) eines Druckwasser-Kernreaktors, wobei der Halter folgendes aufweist:
- Brennstäbe (3), die dazu bestimmt sind, in Führungsrohre einer Anordnung (45) von Kernbrennelementen eingesetzt zu werden,
- einen Träger (5) für die Brennstäbe (3), von dem ausgehend sich die Brennstäbe (3) entlang einer Längsrichtung in einer Richtung erstrecken, die so vorgesehen ist, dass sie senkrecht nach unten ausgerichtet ist, wenn der Halter (1) an einer Anordnung (45) von Kernbrennelementen angeordnet ist,
- mindestens ein Element (41) zur Längsabstützung gegen die obere Platte (51) des Kerns (47) des Kernreaktors,
wobei der Träger (5) folgendes aufweist:
- ein Kopfteil (7) mit einer zentralen Längsachse (C),
- Flügel (9), die sich von dem Kopfteil (7) radial nach außen erstrecken,
- auf die Flügel (9) verteilte Einrichtungen (10) zum Anbringen der Brennstäbe (3), und
- mindestens zwei Elemente (41) zur Abstützung an der oberen Platte (51) des Kerns, wobei diese Abstützelemente (41) jeweils in Längsrichtung von einem jeweiligen Flügel (9) über die Anbringeinrichtungen (10) hinaus in einer Richtung vorstehen, die so vorgesehen ist, dass sie senkrecht nach oben ausgerichtet ist, wenn der Halter (1) an einer Anordnung (45) von Kernbrennelementen angeordnet ist,
**dadurch gekennzeichnet,**
**dass** die Abstützelemente (41) bezogen auf die benachbarten Anbringeinrichtungen (10) radial außenliegend angeordnet sind.

2. Halter nach Anspruch 1,
bei dem die Abstützelemente (41) an den radial äußeren Enden der Flügel (9) vorliegen.

3. Halter nach Anspruch 1 oder 2,
bei dem die Abstützelemente (41) in einer im Wesentlichen regelmäßigen Winkelverteilung um die zentrale Längsachse (C) angeordnet sind.

4. Halter nach Anspruch 3,
bei dem der Träger (5) zwei Abstützelemente (41) aufweist, die bezogen auf die zentrale Längsachse (C) im Wesentlichen diametral entgegengesetzt zueinander angeordnet sind.

5. Halter nach einem der vorherigen Ansprüche,
bei dem zumindest ein Teil (11) des Kopfteils (7) und die Flügel (9) einstückig ausgebildet sind.

6. Halter nach einem der vorherigen Ansprüche,
bei dem die Anbringeinrichtungen (10) Finger (29) zum Aufnehmen der oberen Enden (33) der Brennstäbe (3) sowie Muttern (31) aufweisen, die auf die oberen Enden (33) aufgeschraubt sind, um Brennstäbe (3) in den Aufnahmefingern (29) zu fixieren.

7. Halter nach Anspruch 6,
bei dem die Muttern (31) in Längsrichtung von den Fingern (29) in einer Richtung vorstehen, die so vorgesehen ist, dass sie senkrecht nach oben ausgerichtet ist, wenn der Halter (1) an einer Anordnung (45) von Kernbrennelementen angeordnet ist, und bei dem Muttern (31) auf unterschiedlichen Höhen entlang der zentralen Längsachse (C) angeordnet sind.

8. Halter nach Anspruch 6 oder 7,
bei dem die oberen Enden (33) der Brennstäbe (3) Stangen (39) aufweisen, welche die Muttern (31) durchsetzen und an die Muttern (31) angeschweisst sind.

9. Halter nach einem der vorherigen Ansprüche,
bei dem mindestens ein Flügel (29) eine Passage (30) zum Aufnehmen einer Instrumentenvorrichtung aufweist.

10. Kern (47) eines Druckwasser-Kernreaktors, mit einer oberen Platte (51), mit einer unteren Platte, und mit einer Anordnung (45) von zwischen der oberen Platte (51) und der unteren Platte angeordneten Kernbrennelementen, wobei der Kern (47) ferner feste spinnenförmige Halter (1) und bewegliche spinnenförmige Halter aufweist, die an jeweiligen Anordnungen (45) von Kernbrennelementen angeordnet sind, wobei die festen spinnenförmigen Halter jeweils folgendes aufweisen:
- Brennstäbe (3), die dazu bestimmt sind, in Führungsrohre der jeweiligen Andordnung (45) von Kernbrennelementen eingesetzt zu werden,
- einen Träger (5) für die Brennstäbe (3), von dem ausgehend sich die Brennstäbe (3) entlang einer Längsrichtung in einer Richtung erstrecken, die so vorgesehen ist, dass sie senkrecht nach unten ausgerichtet ist, wenn der Halter (1) an dem jeweiligen Anordnung (45) von Kernbrennelementen angeordnet ist,
- mindestens ein Element (41) zur Längsabstützung gegen die obere Platte (51) des Kerns (47) des Kernreaktors,
**dadurch gekennzeichnet,**
**dass** mindestens einer der festen spinnenförmigen Halter ein fester spinnenförmiger Halter nach einem der vorherigen Ansprüche ist, wobei sich die Abstützelemente (41) des festen spinnenförmigen Halters (1) um eine Wasserdurchtrittsöffnung (55) herum, die in der oberen Platte (51) über derjenigen Andordnung (45) von Kernbrennelementen vorgesehen ist, an der der feste spinnenförmige Halter (1) angeordnet ist, senkrecht gegen diese obere Platte (51) abstützen.

11. Kern nach Anspruch 10,
bei dem mindestens ein beweglicher spinnenförmiger Halter folgendes aufweist:
- Brennstäbe, die dazu bestimmt sind, in Führungsrohre des jeweiligen Kernbrennelementes eingesetzt zu werden,
- einen Träger für die Brennstäbe, von dem ausgehend sich die Brennstäbe entlang einer Längsrichtung in einer Richtung erstrecken, die so vorgesehen ist, dass sie senkrecht nach unten ausgerichtet ist, wenn der bewegliche Halter an der jeweiligen Anordnung (45) von Kernbrennelementen angeordnet ist,
und bei dem die Formen der Träger (5) für den festen Halter (1) und den beweglichen Halter analog zueinander ausgebildet sind.

12. Kern nach Anspruch 11,
bei dem der feste Halter (1) und der bewegliche Halter zueinander benachbart sind.

13. Ensemble mit einer Anordnung (45) von Kernbrennelementen und einem festen spinnenförmigen Halter (1), der dazu geeignet ist, an der Anordnung (45) von Kernbrennelementen angeordnet zu werden,
**dadurch gekennzeichnet,**
**dass** der feste spinnenförmige Halter ein fester spinnenförmiger Halter (1) nach einem der Ansprüche 1 bis 9 ist.
